# EUROPÄISCHE PATENTSCHRIFT

(11) **EP 4 264 218 B1**
(45) Veröffentlichungstag und Bekanntmachung des Hinweises auf die Patenterteilung: **19.02.2025**
(21) Anmeldenummer: 21835173.2
(22) Anmeldetag: 01.12.2021
(51) Int. Cl.: G01M 3/20

(54) **GASLECKSUCHVORRICHTUNG UND GASLECKSUCHVERFAHREN ZUR ERKENNUNG EINES GASLECKS IN EINEM PRÜFLING**
GAS LEAK DETECTION DEVICE AND GAS LEAK DETECTION METHOD FOR IDENTIFYING A GAS LEAK IN A TEST OBJECT
DISPOSITIF DE DÉTECTION DE FUITE DE GAZ ET PROCÉDÉ DE DÉTECTION DE FUITE DE GAZ POUR IDENTIFIER UNE FUITE DE GAZ DANS UN OBJET À CONTRÔLER

(30) Priorität: 21.12.2020 DE 102020134370
(43) Veröffentlichungstag der Anmeldung: 25.10.2023
(73) Patentinhaber: Inficon GmbH, 50968 Köln (DE)
(72) Erfinder: WETZIG, Daniel, 50968 Köln (DE); RUTH, Marcel, 50968 Köln (DE); DECKER, Silvio, 50968 Köln (DE); GRELLMANN, Thomas, 50968 Köln (DE)
(74) Vertreter: dompatent von Kreisler Selting Werner - Partnerschaft von Patent- und Rechtsanwälten mbB
(86) Internationale Anmeldenummer: PCT/EP2021/083737
(87) Internationale Veröffentlichungsnummer: WO 2022/135854

(56) Entgegenhaltungen:
- EP-B1- 1 620 706
- US-B1- 6 286 362

## Beschreibung

Die Erfindung betrifft eine Gaslecksuchvorrichtung zur Erkennung eines Gaslecks in einem Prüfling sowie ein entsprechendes Verfahren.

Grundsätzlich bestehen dabei zwei Möglichkeiten zur Detektion eines Gaslecks, nämlich die integrale Detektion und die lokalisierende Detektion. Bei der integralen Detektion bestehen zwei Möglichkeiten. Erstens kann der Prüfling in einer Prüfkammer enthalten sein, die an einen Gasdetektor angeschlossen ist, wobei der Prüfling mit Prüfgas druckbeaufschlagt wird oder ist während die Prüfkammer evakuiert wird. Zweitens kann alternativ der in einer Prüfkammer oder Prüfhülle enthaltene Prüfling an den Gasdetektor angeschlossen sein und evakuiert werden, während die Prüfkammer bzw. Prüfhülle mit Prüfgas beaufschlagt wird oder ist, z.B. mit Raumluft. Mit der integralen Leckdetektion kann ein Leck lediglich detektiert, jedoch nicht lokalisiert werden.

Zum Lokalisieren eines Lecks erfolgt die lokalisierende Detektion ohne eine Prüfkammer nach dem Schnüffelprinzip oder nach dem Sprühprinzip. Bei dem Schnüffelprinzip wird der Prüfling mit Prüfgas druckbeaufschlagt und das Äußere des Prüflings wird mit einer an eine Vakuumpumpe und einen Gasdetektor angeschlossene Schnüffelsonde abgeschnüffelt. Bei dem Sprühprinzip wird der Prüfling von außen mithilfe einer Sprühpistole mit Prüfgas besprüht, während der Prüfling an die Vakuumpumpe und den Gasdetektor angeschlossen ist.

Derartige Gaslecksuchvorrichtungen bei Verwendung des Prüfgases Helium oder Wasserstoff verwenden als Gasdetektor typischerweise ein Massenspektrometer, während es sich bei der Vakuumpumpe um eine Hochvakuumpumpe, wie z.B. eine Turbomolekularpumpe in Kombination mit einer Vorvakuumpumpe handelt. Zur lokalisierenden Detektion wird der Prüfling mit Hilfe der Vakuumpumpe evakuiert und von außen mit einem Prüfgas besprüht (Sprühprinzip). Zur integralen Dichtheitsprüfung wird der Prüfling mit dem Prüfgas druckbeaufschlagt und in eine Prüfkammer eingelegt. Die Prüfkammer wird mit der Vorvakuumpumpe evakuiert und mit dem Massenspektrometer wird im Vakuum der Prüfgasanteil gemessen. Der Prüfgasanteil ist ein Maß für die Leckrate eines Lecks im Prüfling .

Derartige Vakuumlecksucher werden beispielsweise unter den Bezeichnungen UL3000 und UL5000 von INFICON^{®} vermarktet. Bei diesen Systemen wird zur Bestätigung der Dichtheit eines Systems im Anschluss an die lokalisierende Messung durch Besprühen oder Abschnüffeln des Prüflings eine integrale Druckanstiegsmessung unter Verwendung einer Prüfkammer durchgeführt. Dabei wird der Prüfling in eine mit dem Vakuumlecksucher verbundene Prüfkammer eingebracht, die evakuiert wird, während der Prüfling mit dem Prüfgas druckbeaufschlagt wird. Alternativ wird der Prüfling an den Vakuumlecksucher angeschlossen und evakuiert, während die den Prüfling umgebende Prüfkammer mit dem Prüfgas druckbeaufschlagt wird oder ist.

In DE 16 48 648 C3 wird die massenspektrometrische Leckdetektion nach dem Gegenstromprinzip beschrieben. Dabei wird an den Einlass einer Turbomolekularpumpe ein Prüfbehälter angeschlossen. In dem Prüfbehälter kann sich der auf ein Leck zu untersuchende Prüfling befinden. Der Prüfling ist dabei mit einem Prüfgas, wie zum Beispiel Helium, gefüllt. Die Vordruckseite der Turbomolekularpumpe ist mit einer Vorvakuumpumpe verbunden. An einem Zwischengaseinlass zwischen der Turbomolekularpumpe und der Vorvakuumpumpe ist die Druckseite einer weiteren Turbomolekularpumpe angeschlossen, welche den Gasdetektor in Form eines Massenspektrometers evakuiert. Die beiden Turbomolekularpumpen werden derart betrieben, dass aus dem Prüfbehälter abgezogenes Prüfgas dem Massenspektrometer zugeführt wird, während der Prüfbehälter und das Massenspektrometer unter Zuhilfenahme der Vorvakuumpumpe evakuiert werden.

In EP 1 620 706 B1 ist eine Anordnung zur Gegenstrom-Lecksuche beschrieben, bei der die den Prüfbehälter evakuierende Hochvakuumpumpe ungedrosselt und ohne ein Ventil direkt mit dem Einlass des Lecksuchgeräts und dem mit dem Einlass verbundenen Prüfbehälter verbunden ist. Dadurch ist das Saugvermögen für Helium am Einlass erhöht und die Ansprechzeit für das Prüfgas auch bei Anschluss von Prüflingen mit großem Volumen reduziert.

In DE 101 56 206 A und DE 10 2014 223 841 A werden Anordnungen von Vakuumlecksuchern mit einer Booster-Pumpe beschrieben. Die Booster-Pumpe ist in Form einer zusätzlichen Turbomolekularpumpe im Einlassbereich des Vakuumlecksuchers positioniert, um das Saugvermögen und damit die Ansprechzeit des Vakuumlecksuchers zu verbessern.

US 6,286,362 B1 offenbart einen Leckdetektor mit mindestens zwei Partialdruckanalysatoren.

Der Erfindung liegt die Aufgabe zugrunde, eine verbesserte Gaslecksuchvorrichtung zu schaffen, die sowohl eine lokalisierende Gaslecksuche an einem Prüfling als auch eine integrale Messung ermöglicht, sowie ein entsprechendes Verfahren bereit zu stellen.

Die erfindungsgemäße Gaslecksuchvorrichtung ist definiert durch die Merkmale von Patentanspruch 1. Das erfindungsgemäße Verfahren ist definiert durch die Merkmale von Patentanspruch 6.

Erfindungsgemäß ist zusätzlich zu der Vakuumpumpe und dem mit der Vakuumpumpe verbundenen Gasdetektor ein Gasdrucksensor vorgesehen, der zur integralen Messung des Totaldruckanstiegs innerhalb der Prüfkammer oder innerhalb des Prüflings (Druckanstiegsmethode) als Totaldrucksensor und/oder als gasselektiver Partialdrucksensor zur Messung des Partialdruckanstiegs mindestens eines von dem ersten Prüfgas verschiedenen zweiten Prüfgases innerhalb des Prüflings oder der Prüfkammer (Partialdruckanstiegsmethode) ausgebildet ist. Der Partialdrucksensor kann z.B. durch optische Spektralanalyse des zweiten oder weiteren Prüfgases den Partialdruck des Gases ermitteln. Eine Sperrvorrichtung ist vorgesehen und dazu ausgebildet, den Gasdrucksensor und den Anschluss für den Prüfling oder die Prüfkammer von der Vakuumpumpe vakuumtechnisch zu trennen, wenn der Prüfling oder die Prüfkammer mit dem Gasdrucksensor untersucht wird.

Dadurch wird eine besonders schnelle Messung nach der Druckanstiegsmethode oder dem Akkumulationsprinzip ermöglicht, während die Vakuumpumpe weiterläuft. Für die integrale oder lokalisierende Messung mit dem Gasdetektor wird dabei das erste Prüfgas genutzt während für die integrale Druckanstiegsmessung mit dem Gasdrucksensor das mindestens zweite weitere Prüfgas genutzt wird. Ein Abschalten oder Aussetzen des Betriebs der Vakuumpumpe zur integralen Messung nach der Druckanstiegsmethode oder dem Akkumulationsprinzip ist dann nicht mehr erforderlich, weil die Sperrvorrichtung den Gasdrucksensor und den Prüfling oder die Prüfkammer während der Messung vakuumtechnisch von der Vakuumpumpe trennt.

Bei der Vakuumpumpe kann es sich um eine einzelne Vakuumpumpe oder um eine Vakuumpumpe eines Vakuumpumpsystems handeln, das aus mehreren Vakuumpumpen gebildet ist. Insbesondere kann die beanspruchte Vakuumpumpe eine Hochvakuumpumpe eines Vakuumpumpsystems sein, dass aus einer mindestens einer Vorvakuumpumpe und mindestens einer Hochvakuumpumpe gebildet ist.

Bei dem Gasdetektor kann es sich um ein Massenspektrometer mit einer Hochvakuumpumpe oder einer Ultrahochvakuumpumpe, beispielsweise einer Turbomolekularpumpe, handeln, die die den Prüfling oder die Prüfkammer evakuierende Vakuumpumpe als Vorvakuumpumpe nutzt und das Massenspektrometer über die Vorvakuumpumpe zur Atmosphäre hin evakuiert. Die Vorvakuumpumpe und die Hochvakuumpumpe können hierbei als Vakuumpumpsystem bezeichnet werden. Alternativ kann es sich bei dem Gasdetektor um einen gasspezifischen optischen Gasdetektor oder Halbleitersensor handeln.

Bei dem Gasdrucksensor kann es sich um einen Drucksensor zur Messung des Totaldruckanstiegs innerhalb der Prüfkammer oder innerhalb des Prüflings nach der Druckanstiegsmethode handeln. Alternativ oder ergänzend kann der Gasdrucksensor als gasselektiver Partialdrucksensor zur Messung des Partialdruckanstiegs des Prüfgases ausgebildet sein. Als Partialdruck wird vorliegend der relative Anteil des Prüfgases in dem untersuchten Gasgemisch bezeichnet. Die Messung des Partialdruckanstiegs kann nach der Akkumulationsmethode durchgeführt werden, bei der der Partialdruckanstieg des sich im Messbereich akkumulierenden Gases bei abgesperrter Vakuumpumpe gemessen wird.

Bei dem Gasdrucksensor kann es sich insbesondere um einen Membranfenstersensor, um einen absorptionsspektroskopischen Sensor, z.B. einen Infrarotabsorptionssensor, um einen emissionsspektroskopischen Sensor, z.B. einen OES-Sensor, oder um Halbleiter-Gassensoren, chemische Gassensoren oder optische Gas-Detektoren handeln. Insbesondere handelt es sich bei dem Gasdrucksensor ("gas pressure sensor") nicht zwingend um einen Drucksensor ("pressure gauge"). Der Gasdrucksensor misst im Falle der Totaldruckanstiegsmethode den Anstieg des Totaldrucks eines Gasgemisches, das das zweite Prüfgas beinhaltet. Im Falle des Partialdruckanstiegs misst der Gasdrucksensor den Anstieg des Partialdruckanteils mindestens des zweiten Prüfgases.

Die in einem Ausführungsbeispiel des Gasdrucksensors ausgeführte optische Spektralanalyse ermöglicht eine besonders schnelle Auswertung nach der Druckanstiegsmethode oder dem Akkumulationsprinzip des Totaldrucks und/oder des Partialdrucks.

Bei dem gasselektiven Partialdrucksensor handelt es sich vorteilhafterweise um einen OES-Sensor, der zur optischen Emissionsspektroskopie ausgebildet ist.

Vorteilhafterweise ist der Drucksensor in einem Gasleitungsweg enthalten oder an diesen angeschlossen, der den Anschluss für den Prüfling oder die Prüfkammer mit der Vakuumpumpe oder dem Gasdetektor verbindet.

Bei der Sperrvorrichtung kann es sich um eine selektiv steuerbare Sperrvorrichtung handeln, die manuell, elektronisch und/oder pneumatisch gesteuert sperrt. Hierzu können selektiv betätigbare oder steuerbare Ventile in den zu sperrenden Gasleitungswegen verwendet werden. Alternativ kann die Sperrvorrichtung beispielsweise Sperrschieberventile, Schmetterlingsventile, oder Balg-Absperrventile aufweisen, um die vakuumtechnische Trennung der Gasleitungswege zu bewirken.

Vorteilhafterweise pumpt die Booster-Pumpe während der Messung, so dass das im Prüfvolumen aus einem Leck ausströmende Gas in das Volumen auf der stromabwärts orientierten Seite der Turbomolekularpumpe hin verdichtet wird. In der Regel ist das Volumen der Prüfkammer bzw. des Prüflings um ein Vielfaches größer als das Volumen im Bereich hinter der verdichtenden Turbomolekularpumpe, so dass der Druckanstieg in diesem verdichteten Gasvolumen in etwa um den Faktor des Volumen-Verhältnisses verstärkt ist.

Im Folgenden werden anhand der Figuren Ausführungsbespiele der Erfindung näher erläutert. Es zeigen:
- Figur 1: eine schematische Darstellung eines Ausführungsbeispiels ohne Booster-Pumpe und
- Figur 2: eine schematische Darstellung eines entsprechenden Ausführungsbeispiels mit Booster-Pumpe.

Beide Figuren zeigen jeweils eine Gaslecksuchvorrichtung mit den folgenden Komponenten:
einem Gasdetektor 12;
einem Anschluss 20 für den Prüfling oder eine den Prüfling aufnehmende Prüfkammer;
einer Vakuumpumpe 16 zum Evakuieren eines an den Anschluss 20 angeschlossenen Prüflings und des Gasdetektors 12.

Ein Gasleitungsweg 22 verbindet den Anschluss 20 mit der Vakuumpumpe 14.

Bei dem Gasdetektor 12 der dargestellten Ausführungsbeispiele handelt es sich um ein Massenspektrometer, das von einer Turbomolekularpumpe 18 evakuiert wird. Der Gasdetektor 12 und die Turbomolekularpumpe 18 können hierbei als ein Detektorsystem bezeichnet werden. Der Auslass der Turbomolekularpumpe 18 ist an den Einlass der Vakuumpumpe 16 angeschlossen und nutzt diese als Vorvakuumpumpe. Dadurch bilden die Vakuumpumpe 16 und die Turbomolekularpumpe 18 ein Vakuumpumpsystem 14. Der Auslass der Vakuumpumpe 16 ist zur Atmosphäre hin offen.

Erfindungsgemäß ist ein Gasdrucksensor 24, bei dem es sich um einen Totaldrucksensor und/oder um einen gasselektiven Partialdrucksensor 24 z.B. in Form eines OES (optische Emissionsspektroskopie) - Sensors handeln kann, an den Gasleitungsweg 22 angeschlossen. Hierzu ist stromaufwärts des Gasdrucksensors 24, d.h. zwischen dem Gasdrucksensor 24 und dem Gasleitungsweg 22 eine Sperrvorrichtung 26 ausgebildet, über die der Gasdrucksensor 24 mit dem Gasleitungsweg 22 verbunden ist. Die Sperrvorrichtung 26 ist dazu ausgebildet, eine gasleitende Verbindung zwischen dem Anschluss 20 und dem Gasdrucksensor 24 herzustellen, während die Verbindung zwischen dem Anschluss 20 und den übrigen Komponenten, d.h. insbesondere dem Gasdetektor 12 und der Vakuumpumpe 16, getrennt wird. Im einfachsten Fall kann es sich bei der Sperrvorrichtung 26 um einen Schalter handeln, der wahlweise den Gasleitungsweg 22 zwischen dem Anschluss 20 und der Vakuumpumpe 16 durchschaltet und die Verbindung zu dem Gasdrucksensor 24 sperrt oder umgekehrt. Bei dem Schalter kann es sich um ein Wechselventil oder um ein 3-2-Wege-Ventil handeln.

Zur vereinfachten Darstellung ist die Sperrvorrichtung 26 in den Figuren als Kästchen dargestellt, das sich über die Gasleitungswege 22, 28 erstreckt, um dadurch zum Ausdruck zu bringen, dass die Sperrvorrichtung die Gasleitungswege 22, 28 sperren kann. Dies kann durch ein steuerbares Ventil 27 in dem Gasleitungsweg 22 erfolgen, um die Verbindung zwischen dem Anschluss 20, dem Gasdrucksensor 24 und der Vakuumpumpe 26 zu sperren. Ergänzend umfasst die Sperrvorrichtung der dargestellten Ausführungsbeispiele ein steuerbares Ventil 25 zum Sperren des Gasleitungsweges 28, der die massenspektrometrische, d.h. die mit dem Gasdetektor 12 verbundene, Hochvakuumpumpe 18 mit dem Anschluss 20 und dem Gasdrucksensor 24 verbindet. Bei den in den Figuren dargestellten Ausführungsbeispielen ist also zumindest ein Teil der Sperrvorrichtung 26 in dem Gasleitungsweg 22 enthalten, um diesen sperren zu können.

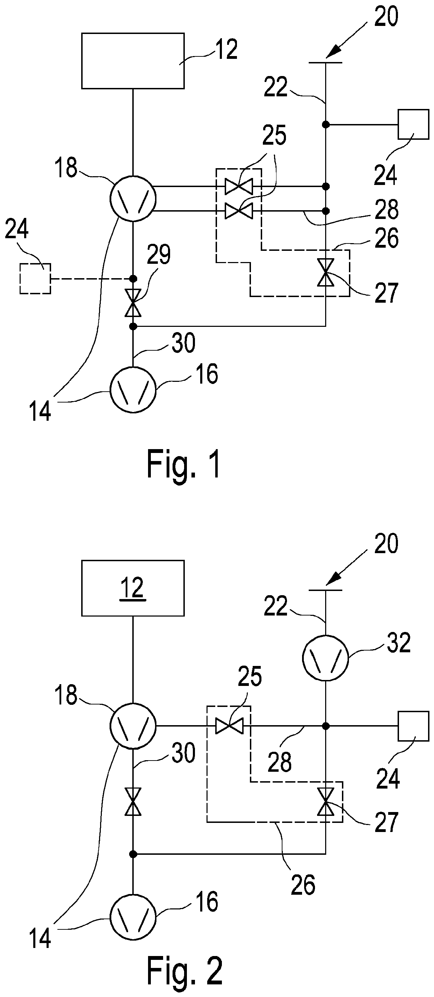

Eine andere mögliche Anordnung des Gasdrucksensors 24 ist in Fig. 1 gestrichelt dargestellt. So kann der Gasdrucksensor 24 an den Verbindungszweig 30 angeschlossen sein, der die Vorvakuumpumpe 16 mit der Turbomolekularpumpe 18 verbindet. In diesem Fall wird die Sperrvorrichtung 26 durch das steuerbare Ventil 29 in dem Gasleitungsweg 30 gebildet.

Entsprechende Anordnungen der Sperrvorrichtung 26 und des Gasdrucksensors 24 sind auch bei dem in Figur 2 dargestellten Ausführungsbeispiel denkbar, ohne dort separat eingezeichnet zu sein.

In Fig. 2 ist eine zusätzliche Booster-Pumpe 32 in Form einer Turbomolekularpumpe in dem Gasleitungsweg 22 enthalten, um den Anschluss 20 über die Vakuumpumpe 16 zu evakuieren. Vorteilhafterweise sind dort der Gasdrucksensor 24 und die Sperrvorrichtung 26 an den Gasleitungsweg 22 stromabwärts der Booster-Pumpe 32 und stromaufwärts der Vorvakuumpumpe 16 angeschlossen, d.h. mit dem Abschnitt des Gasleitungsweges 22 verbunden, der die Booster-Pumpe 32 mit der Vorvakuumpumpe 16 verbindet.

## Patentansprüche

1. Gaslecksuchvorrichtung zur Erkennung eines Gaslecks in einem Prüfling mit
einem Anschluss (20) für den Prüfling oder eine den Prüfling aufnehmende Prüfkammer;
einer mit dem Anschluss (20) verbundenen Vakuumpumpe (16, 18) zur Evakuierung des Prüflings oder der Prüfkammer,
einem mit der Vakuumpumpe (16, 18) und dem Anschluss (20) verbundenen Gasdetektor (12), der zur Detektion eines ersten Prüfgases und zur integralen Leckdetektion oder zur lokalisierenden Leckdetektion eines Gaslecks in dem Prüfling nach dem Sprühprinzip bei kontinuierlichem Betrieb der Vakuumpumpe (16, 18) ausgebildet ist,
einem mit der Vakuumpumpe (16, 18) und dem Anschluss (20) verbundenen Gasdrucksensor (24), der zur integralen Messung des Totaldruckanstiegs nach der Druckanstiegsmethode und/oder des Partialdruckanstiegs mindestens eines von dem ersten Prüfgas verschiedenen zweiten Prüfgases nach der Partialdruckanstiegsmethode ausgebildet ist und
einer Sperrvorrichtung (26), die dazu ausgebildet ist, den Gasdrucksensor (24) und den Anschluss (20) von der Vakuumpumpe (16, 18) vakuumtechnisch zu trennen, wenn der Prüfling mit dem Gasdrucksensor (24) untersucht wird,
**dadurch gekennzeichnet**
**dass** ein den Anschluss (20) mit der Vakuumpumpe (16, 18) verbindender Gasleitungsweg (22) eine Booster-Pumpe (32) aufweist und der Gasdrucksensor (24) in dem Gasleitungsweg (22) zwischen der Booster-Pumpe (32) und der Vakuumpumpe (16, 18) und dadurch stromabwärts der Booster-Pumpe (32) und stromaufwärts der Vakuumpumpe (16, 18) angeordnet ist, um bei geschlossener Sperrvorrichtung den Totaldruckanstieg und/oder den Partialdruckanstieg des zweiten Prüfgases mit dem Gasdrucksensor (24) in dem Gasleitungsweg (22) stromabwärts der Booster-Pumpe (32) und stromaufwärts der Vakuumpumpe (16, 18) und/oder des Gasdetektors (12) zu messen.

2. Gaslecksuchvorrichtung nach Anspruch 1, **dadurch gekennzeichnet, dass** der Gasdrucksensor (24) an einen Glasleitungsweg (22) angeschlossen ist, der den Anschluss (20) mit der Vakuumpumpe (16, 18) und/oder mit dem Gasdetektor (12) verbindet, so dass der Gasdrucksensor (24) das Gas stromaufwärts der Vakuumpumpe (16, 18) bzw. des Gasdetektors (12) misst.

3. Gaslecksuchvorrichtung nach einem der vorhergehenden Ansprüche, **dadurch gekennzeichnet, dass** der Gasdrucksensor (24) zur optischen Spektralanalyse des zweiten Prüfgases ausgebildet ist.

4. Gaslecksuchvorrichtung nach einem der vorhergehenden Ansprüche, **dadurch gekennzeichnet, dass** der Gasdetektor (12) ein Massenspektrometer mit einer Hochvakuumpumpe (18), insbesondere einer Ultrahochvakuumpumpe, in dem den Gasdetektor (12) mit der Vakuumpumpe (16, 18) verbindenden Gasleitungsweg (30) ist und die Sperrvorrichtung (26) dazu ausgebildet ist, den Gasdrucksensor (24) und den Anschluss (20) von der Hochvakuumpumpe (18) vakuumtechnisch zu trennen, wenn der Prüfling mit dem Gasdrucksensor (24) untersucht wird.

5. Gaslecksuchvorrichtung nach einem der vorhergehenden Ansprüche, **dadurch gekennzeichnet, dass** der Gasdrucksensor (24) zur integralen Messung des Partialdruckanstiegs des zweiten Prüfgases am Anschluss (20) nach dem Akkumulationsprinzip ausgebildet ist.

6. Gaslecksuchverfahren zur Erkennung eines Gaslecks in einem Prüfling, mit den nachfolgenden Schritten in beliebiger Reihenfolge:
Ermitteln eines Gaslecks in dem Prüfling durch Beaufschlagen des Prüflings oder einer den Prüfling umgebenden Prüfkammer mit einem ersten Prüfgas und Detektieren des ersten Prüfgases anhand der integralen Leckdetektion oder anhand der lokalisierenden Leckdetektion nach dem Sprühprinzip bei kontinuierlichem Evakuieren des Prüflings oder der Prüfkammer mit einer Vakuumpumpe (16, 18) und
Erkennen eines Gaslecks in dem Prüfling durch Beaufschlagen des Prüflings oder der Prüfkammer mit mindestens einem zweiten, von dem ersten Prüfgas verschiedenen Prüfgas und durch integrales Messen des Totaldruckanstiegs des zweiten Prüfgases nach der Druckanstiegsmethode und/oder des Partialdruckanstiegs des zweiten Prüfgases nach der Partialdruckanstiegsmethode mit einem Gasdrucksensor (24), wobei der Prüfling oder die Prüfkammer und der Gasdrucksensor (24) währenddessen von der Vakuumpumpe (16, 18) vakuumtechnisch getrennt sind und der Prüfling oder die Prüfkammer dadurch nicht von der Vakuumpumpe (16, 18) evakuiert wird,
**dadurch gekennzeichnet,**
**dass** der Totaldruckanstieg und/oder der Partialdruckanstieg des zweiten Prüfgases mit dem Gasdrucksensor (24) in einem Gasleitungsweg (22) gemessen wird, der den Auslass einer Booster-Pumpe (32), deren Einlass mit dem Anschluss (20) für den Prüfling oder die Prüfkammer verbunden ist, mit der Vakuumpumpe (16, 18) und/oder dem Gasdetektor (12) verbindet, so dass der Totaldruckanstieg und/oder der Partialdruckanstieg stromabwärts der Booster-Pumpe (32) und stromaufwärts der Vakuumpumpe (16, 18) und/oder des Gasdetektors (12) gemessen wird.

7. Gaslecksuchverfahren nach Anspruch 6, **dadurch gekennzeichnet, dass** der Totaldruckanstieg und/oder der Partialdruckanstieg des zweiten Prüfgases in einem Gasleitungsweg (22), der einen Anschluss (20) für den Prüfling oder einer den Prüfling aufnehmenden Prüfkammer mit der Vakuumpumpe (16, 18) und/oder mit dem Gasdetektor (12) verbindet, oder in einem daran angeschlossenen vergrößerten oder verkleinerten Messvolumen gemessen wird.

8. Gaslecksuchverfahren nach einem der Ansprüche 6 bis 7, **dadurch gekennzeichnet, dass** der Partialdruckanstieg einer oder mehrerer verschiedener Komponenten von Luft gemessen wird.

9. Gaslecksuchverfahren nach einem der Ansprüche 6 bis 8, **dadurch gekennzeichnet, dass** der Partialdruckanstieg des Prüfgases durch Analysieren des optischen Spektrums des Prüfgases gemessen wird.

10. Gaslecksuchverfahren nach einem der Ansprüche 6 bis 9, **dadurch gekennzeichnet, dass** der Totaldruckanstieg und/oder der Partialdruckanstieg des zweiten Prüfgases in einem Gasleitungsweg (28), der eine Hochvakuumpumpe (18) des Gasdetektors (12) mit dem Anschluss (20) und dem Gasdrucksensor (24) verbindet, oder in einem daran angeschlossenen vergrößerten oder verkleinerten Messvolumen gemessen wird.

## Claims

1. A gas leak detection device for identifying a gas leak in a test object, comprising
a connector (20) for the test object or for a test chamber accommodating the test object;
a vacuum pump (16, 18) connected to the connector (20) for evacuating the test object or test chamber;
a gas detector (12) connected to the vacuum pump (16, 18) and to the connector (20) and configured for detection of a first test gas and for integral leak detection or for localizing leak detection of a gas leak in the test object according to the spraying principle during continuous operation of the vacuum pump (16, 18),
a gas pressure sensor (24) connected to the vacuum pump (16, 18) and to the connector (20) and configured for integral measurement of the total pressure increase according to the pressure increase method and/or the partial pressure increase of at least one second test gas different from the first test gas according to the partial pressure increase method, and
a blocking device (26) configured for separating, in terms of vacuum, the gas pressure sensor (24) and the connector (20) from the vacuum pump (16, 18) when the test object is examined by means of the gas pressure sensor (24),
**characterized in that** a gas conducting path (22) connecting the connector (20) to the vacuum pump (16, 18) comprises a booster pump (32), and the gas pressure sensor (24) is arranged in the gas conducting path (22) between the booster pump (32) and the vacuum pump (16, 18) and thus downstream of the booster pump (32) and upstream of the vacuum pump (16, 18) so as to measure, with the blocking device closed, the total pressure increase and/or the partial pressure increase of the second test gas in the gas conducting path (22) downstream of the booster pump (32) and upstream of the vacuum pump (16, 18) and/or of the gas detector (12), using the gas pressure sensor (24).

2. The gas leak detection device according to claim 1, **characterized in that** the gas pressure sensor (24) is connected to a gas conducting path (22) which connects the connector (20) to the vacuum pump (16, 18) and/or to the gas detector (12) such that the gas pressure sensor (24) measures the gas upstream of the vacuum pump (16, 18) and the gas detector (12), respectively.

3. The gas leak detection device according to any one of the preceding claims, **characterized in that** the gas pressure sensor (24) is configured for an optical spectral analysis of the second test gas.

4. The gas leak detection device according to any one of the preceding claims, **characterized in that** the gas detector (12) is a mass spectrometer having a high-vacuum pump (18), in particular an ultrahigh-vacuum pump, in the gas conducting path (30) connecting the gas detector (12) to the vacuum pump (16, 18), and the blocking device (26) is configured for separating, in terms of vacuum, the gas pressure sensor (24) and the connector (20) from the high-vacuum pump (18) when the test object is examined by means of the gas pressure sensor (24).

5. The gas leak detection device according to any one of the preceding claims, **characterized in that** the gas pressure sensor (24) is configured for integral measurement of the partial pressure increase of the second test gas at the connector (20) according to the accumulation principle.

6. A gas leak detection method for identifying a gas leak in a test object, comprising the following steps in any order:
determining a gas leak in the test object by supplying a first test gas to the test object or to a test chamber surrounding the test object and detecting the first test gas on the basis of integral leak detection or on the basis of localizing leak detection according to the spraying principle during continuous evacuation of the test object or of the test chamber by means of a vacuum pump (16, 18), and
identifying a gas leak in the test object by supplying at least one second test gas different from the first test gas to the test object or to the test chamber,
and by integral measurement of the total pressure increase in the test object or the test chamber according to the pressure increase method and/or the partial pressure increase of the second test gas inside the test object or the test chamber according to the partial pressure increase method, while the test object or the test chamber and the gas pressure sensor (24) are disconnected from the vacuum pump (16, 18) and thus the test object or the test chamber is not evacuated,
**characterized in that**
using the gas pressure sensor (24), the total pressure increase and/or the partial pressure increase of the second test gas are measured in a gas conducting path (22) which connects the outlet of a booster pump (32), whose inlet is connected to the connector (20) for the test object or the test chamber, to the vacuum pump (16, 18) and/or to the gas detector (12), such that the total pressure increase and/or the partial pressure increase are measured downstream of the booster pump (32) and upstream of the vacuum pump (16, 18) and/or the gas detector (12).

7. The gas leak detection method according to claim 6, **characterized in that** the total pressure increase and/or the partial pressure increase of the second test gas are measured in a gas conducting path (22) which connects a connector (20) for the test object or the test chamber accommodating the test object to the vacuum pump (16, 18) and/or to the gas detector (12), or in an increased or decreased measuring volume connected thereto.

8. The gas leak detection method according to any one of claims 6 to 7, **characterized in that** the partial pressure increase of one or a plurality of different components of air is measured.

9. The gas leak detection method according to any one of claims 6 to 8, **characterized in that** the partial pressure increase of the test gas is measured by analyzing the optical spectrum of the test gas.

10. The gas leak detection method according to any one of claims 6 to 9, **characterized in that** the total pressure increase and/or the partial pressure increase of the second test gas are measured in a gas conducting path (28) which connects a high-vacuum pump (18) of the gas detector (12) to the connector (20) and to the gas pressure sensor (24), or in an increased or decreased measuring volume connected thereto.

## Revendications

1. Dispositif de détection de fuite de gaz pour identifier une fuite de gaz dans un objet à contrôler, comprenant
un raccord (20) pour l'objet à contrôler ou pour une chambre de contrôle recevant l'objet à contrôler,
une pompe à vide (16, 18) reliée au raccord (20) pour évacuer l'objet à contrôler ou la chambre de contrôle,
un détecteur de gaz (12) relié à la pompe à vide (16, 18) et au raccord (20) et qui est configuré pour la détection d'un premier gaz de test et pour la détection de fuite intégrale ou pour la détection de fuite qui localise une fuite de gaz dans l'objet à contrôler, selon le principe de vaporisation pendant un fonctionnement continu de la pompe à vide (16, 18),
un capteur de pression de gaz (24) relié à la pompe à vide (16, 18) et au raccord (20), qui est configuré pour une mesure intégrale de l'augmentation de la pression totale selon le procédé d'augmentation de la pression et/ou de l'augmentation de la pression partielle d'au moins un deuxième gaz de test différent du premier gaz de test selon le procédé d'augmentation de la pression partielle, et
un dispositif de blocage (26) qui est configuré pour séparer le capteur de pression de gaz (24) et le raccord (20) de la pompe à vide (16, 18) sur le plan du vide lorsque l'objet à contrôler est examiné avec le capteur de pression (24),
**caractérisé en ce**
**qu'**un chemin de conduite de gaz (22) reliant le raccord (20) à la pompe à vide (16, 18) comprend une pompe booster (32) et que le capteur de pression de gaz (24) est disposé sur le chemin de conduite de gaz (22) entre la pompe booster (32) et la pompe à vide (16, 18) et ainsi en aval de la pompe booster (32) et en amont de la pompe à vide (16, 18), afin de mesurer, le dispositif de blocage étant fermé, l'augmentation de la pression totale et/ou l'augmentation de la pression partielle du deuxième gaz de test avec le capteur de pression de gaz (24) dans le chemin de conduite de gaz (22) en aval de la pompe booster (32) et en amont de la pompe à vide (16, 18) et/ou du détecteur de gaz (12).

2. Dispositif de détection de fuite de gaz selon la revendication 1, **caractérisé en ce que** le capteur de pression de gaz (24) est raccordé à un chemin de conduite de gaz (22) qui relie le raccord (20) à la pompe à vide (16, 18) et/ou au détecteur de gaz (12) si bien que le capteur de pression de gaz (24) mesure le gaz en amont de la pompe à vide (16, 18) ou, respectivement, du détecteur de gaz (12).

3. Dispositif de détection de fuite de gaz selon l'une des revendications précédentes, **caractérisé en ce que** le capteur de pression de gaz (24) est configuré pour une analyse spectrale optique du deuxième gaz de test.

4. Dispositif de détection de fuite de gaz selon l'une des revendications précédentes, **caractérisé en ce que** le détecteur de gaz (12) est un spectromètre de masse avec une pompe à vide poussé (18), notamment une pompe à ultravide dans le chemin de conduite de gaz (30) reliant le détecteur de gaz (12) à la pompe à vide (16, 18) et que le dispositif de blocage (26) est configuré pour séparer le capteur de pression de gaz (24) et le raccord (20) de la pompe à vide poussé (18) sur le plan de la technique de vide, lorsque l'objet à contrôler est examiné avec le capteur de pression de gaz (24).

5. Dispositif de détection de fuite de gaz selon l'une des revendications précédentes, **caractérisé en ce que** le capteur de pression de gaz (24) est configuré pour une mesure intégrale de l'augmentation de la pression partielle du deuxième gaz de test au raccord (20) selon le principe de l'accumulation.

6. Procédé de détection de fuite de gaz pour identifier une fuite de gaz dans un objet à contrôler, avec les étapes suivantes dans quelque ordre que ce soit :
rechercher une fuite de gaz dans l'objet à contrôler en chargeant l'objet à contrôler ou une chambre de contrôle entourant l'objet à contrôler d'un premier gaz de test et détecter le premier gaz de test moyennant la détection de fuite intégrale ou moyennant la détection de fuite qui localise une fuite, selon le principe de vaporisation pendant un vidage continu de l'objet à contrôler ou de la chambre de contrôle moyennant une pompe à vide (16, 18) et
identifier une fuite de gaz dans l'objet à contrôler en chargeant l'objet à contrôler ou la chambre de contrôle d'un deuxième gaz de test différent du premier gaz de test et par mesure intégrale de l'augmentation de la pression totale du deuxième gaz de test selon le principe de l'augmentation de la pression et/ou de l'augmentation de la pression partielle du deuxième gaz de test selon le principe de l'augmentation de la pression partielle avec un capteur de pression de gaz (24), l'objet à contrôler ou la chambre de contrôle et le capteur de pression de gaz (24) étant alors séparé de la pompe à vide (16, 18) sur le plan de la technique du vide et l'objet à contrôler ou la chambre de contrôle n'étant alors pas vidé(e) par la pompe à vide (16, 18),
**caractérisé en ce**
**que** l'augmentation de la pression totale et/ou l'augmentation de la pression partielle du deuxième gaz de test est mesurée avec le capteur de pression de gaz (24) dans un chemin de conduite de gaz (22) qui relie la sortie d'une pompe booster (32), dont l'entrée est raccordée au raccord (20) pour l'objet à contrôler ou la chambre de contrôle, à la pompe à vide (16, 18) et/ou au détecteur de gaz (12), si bien que l'augmentation de la pression totale et/ou l'augmentation de la pression partielle soit mesurée en aval de la pompe booster (32) et en amont de la pompe à vide (16, 18) et/ou du détecteur de gaz (12).

7. Procédé selon la revendication 6, **caractérisé en ce que** l'augmentation de la pression totale et/ou l'augmentation de la pression partielle du deuxième gaz de test est mesurée dans un chemin de conduite de gaz (22) qui relie un raccord (20) pour l'objet à contrôler ou pour une chambre de contrôle recevant l'objet à contrôler, à la pompe à vide (16, 18) et/ou au détecteur de gaz (12), ou dans un volume de mesure agrandi ou réduit qui y est raccordé.

8. Procédé selon l'une des revendications 6 à 7, **caractérisé en ce que** l'augmentation de la pression partielle d'une composante, ou de plusieurs composantes différentes, de l'air est mesurée.

9. Procédé selon l'une des revendications 6 à 8, **caractérisé en ce que** l'augmentation de la pression partielle du gaz de test est mesurée par une analyse du spectre optique du gaz de test.

10. Procédé selon l'une des revendications 6 à 9, **caractérisé en ce que** l'augmentation de la pression totale et/ou l'augmentation de la pression partielle du deuxième gaz de test est mesurée dans un chemin de conduite de gaz (28) qui relie une pompe à vide poussé (18) du détecteur de gaz (12) au raccord (20) et au capteur de pression de gaz (24), ou dans un volume de mesure agrandi ou réduit qui y est raccordé.
